# EUROPEAN PATENT SPECIFICATION

(11) **EP 0 680 519 B1**
(45) Date of publication and mention of the grant of the patent: **20.08.1997**
(21) Application number: 92923372.4
(22) Date of filing: 12.11.1992
(51) Int. Cl.: C21B 13/08, C21C 5/56

(54) **HIGH-PRODUCTION ROTARY FURNACE STEELMAKING**
VERFAHREN ZUR STAHLHERSTELLUNG IN DREHROHROFEN MIT HOHER PRODUKTIONSRATE
PRODUCTION D'ACIER EN FOURNEAU ROTATIF A HAUT RENDEMENT

(43) Date of publication of application: 08.11.1995
(73) Proprietor: Sherwood, William Lyon, Vancouver British Columbia V6P 5M3 (CA)
(72) Inventor: Sherwood, William Lyon, Vancouver British Columbia V6P 5M3 (CA)
(74) Representative: Sunderland, James Harry
(86) International application number: CA9200489
(87) International publication number: WO9411536

(56) References cited:
- EP-A- 0 134 336
- FR-A- 2 455 086
- GB-A- 1 115 404
- US-A- 3 542 350
- US-A- 3 814 596
- US-A- 5 163 997

## Description

The invention relates to the art of iron and steelmaking and, more particularly, is a process for steelmaking in a rotary-furnace realizing high charge heating and melting rates and thereby markedly higher rates of production.

Rotary furnaces heretofore have been utilized mainly for batch-wise melting of cast iron with only very limited application to steel, and with very low production rates in comparison to those employed in steel producing plants. My issued United States Patent Nos. 4,105,438; 4,456,476; 4,541,865; and 4,615,511 and European Patent application EP-A-134 336 describe rotary furnace processes and apparatus adapted for continuous steelmaking, primarily from a metallic charge. A perception that this technology also has a relatively low rate of production when compared, for example, to basic oxygen and electric-arc steelmaking, has proven to be a barrier to its implementation in high-tonnage steel production.

In melting of steel scrap in fuel-fired furnaces, such as open-hearth furnaces and rotary furnaces, the melting temperature of steel is high and very close to the maximum permissable operating temperature of the refractories. Since the rate of heating varies directly according to the temperature differential between furnace and charge, this limitation on the maximum temperature differential has also been a key limit on attainable production rate.

The total amount of heat transferred depends directly upon the effective heat transfer area. In the case of rotary furnaces, as compared to stationary and tilting hearth furnaces, a very substantial additional heat transfer area is provided for heating by cyclical flame-to-wall, followed by wall-to-charge heat transfer, during each rotation as the furnace wall passes beneath the charge.

This invention is a steelmaking process and apparatus adapted for achieving a multi-fold increase in melting heat transfer rate, featuring means for increasing the furnace-to-charge temperature differential in the steel melting zone, by depressing the temperature of the melt essentially independently of the flame and furnace temperature.

The invention is defined in claim 7 and preferred embodiments thereof are defined in claims 2-9.

According to the invention, a process is provided for steelmaking in an elongated rotary furnace incorporating refractory inner furnace walls extending along the length of the furnace from a restricted annular charge end opening to a restricted annular discharge end opening, comprising the combination of the following steps:
a) maintaining a hot liquid ferrous metal bath with a bath top surface spanning and confined between said charge end and discharge end openings and at least partially covered by a layer of slag, with undersurface contained and supported within said inner furnace walls, and with a melting zone comprising a substantial portion of said furnace length holding a melting zone bath containing solid charge not yet melted;
(b) supplying heat to said bath by combustion of fuel and oxygen to effect heat radiation directly onto said bath and slag surface from above and also indirectly by heating said inner furnace walls and thereby said bath by direct transfer from said wall surface to said under-surface of the bath during each rotation, during the interval that the heated walls are passed beneath and in direct contact with said bath;
(c) introducing supplementary carbon proximate the charge end opening to dissolve in the bath in sufficient quantity to form a liquid heat-transfer medium within said melting zone with lowered melting-point temperature as characteristic of cast iron containing carbon in the range of about 2 to 4.25 per cent carbon;
(d) adding a charge of solid steel scrap, into said liquid heat-transfer medium proximate said charge end opening, thereby continually cooling and maintaining said heat-transfer medium at a lowered temperature approaching said bath melting-point temperature;
(e) continually advancing said solid steel scrap forward along said melting zone at a substantially faster average rate than said liquid heat-transfer medium is advancing, but not so rapidly that there is insufficient scrap present at each furnace cross-section to absorb substantially an equivalent quantity of heat to that transferred from said furnace gases and walls into said heat-transfer medium, that is, as necessary to cool and maintain said lowered temperature of said medium at each cross-section of said melting zone;
(f) allowing said solid steel scrap to melt upon approaching completion of melting at termination of the melting zone, the scrap melted at this stage thereby diluting and lowering the bath carbon content with corresponding increase in bath melting-point temperature; and
(g) discharging molten liquid ferrous metal from proximate said discharge end opening.

The preferred embodiment includes the step of restricting the metal flow cross-section at an intermediate location along the furnace by means of an annular dam, thus substantially obstructing solid scrap from further passage and providing a substantially 'solid-free' temperature-composition adjustment zone extending to the discharge end, allowing liquid metal flow essentially only one-way from melting zone to temperature-composition adjustment zone in the axial direction, without back-mixing across said annular dam restriction.

Ideally, the average axial rate of advance of the liquid metal along the melting zone approaches zero whereby solid steel scrap just melted comprises the major portion of the liquid passing on from the melting zone.

In an economically advantageous mode of operation, the melting zone bath is confined within magnesia-carbon refractory walls whereby the high bath carbon content substantially decreases refractory loss caused by refractory-carbon oxidation, and the slag layer is maintained at or nearly magnesia-saturation, decreasing the erosion of magnesia by its dissolution in the slag.

There are objects and advantages of the present invention additional to the increase in production rate. Firstly, the refractories operate at a lower average temperature and extreme superheat of the furnace interior is rendered unnecessary to realize satisfactory melting rates. There is therefore a coincident increase in refractory life expectation. This is in addition to the benefits from the above features employing magnesia-carbon refractories and magnesia-saturated slags. In view of the throughput increase, overall improvement in refractory usage per unit of steel output is very substantial.

Secondly, by immediately submerging the ferrous scrap in liquid high-carbon iron upon charging, surface oxidation during melting is essentially eliminated, substantially reducing the presence of FeO and facilitating control of slag and metal composition and increasing metal yield. This is an immense benefit when considered in comparison to oxy-fuel burner melting applied in open hearth furnaces, electric-arc furnaces or batch-type rotary furnaces.

Thirdly, the process of the invention almost completely eliminates or suppresses the discharge of iron oxides and other particulate emissions in the off-gas, or of unburned combustibles. The established alternatives, such as electric-arc and basic oxygen furnaces, generate particulates in quantities many times greater than this invention. Oxy-gas flames also generate negligible nitrogen oxides. Because of the high process thermal efficiency, there is also much less carbon dioxide generated than with the alternatives.

It will be understood that the background, objects, advantages and general summary of the invention has been only generally described and that various other objects, features and advantages of the process and apparatus of this invention will become apparent from the following detailed description and claims, and by referring to the accompanying drawings, in which:
Fig. 1 is a diagrammatic side view in section of the rotary furnace of this invention during operation;
Fig. 2 is a diagrammatic cross-section view of the loaded rotary furnace during operation, along plane 2-2 of Fig. 1, illustrating the sequence of heat transfer during furnace rotation;
Fig. 3 is a graph illustrating the general pattern of temperature distribution within the refractory lining of the furnace during operation; Fig. 4 presents two graphs, one being a magnified view of detail 3-3, Fig. 3, showing the temperature distribution immediately beneath the inside refractory surface, and the other showing the relevant portion of the iron-carbon phase diagram, with dotted lines connecting the graphs which relate bath carbon and temperature to the amount of heat transferred into the bath per rotation of the furnace; and
Fig. 5 is a graph showing representative temperatures and carbon contents along the length of the rotary furnace of Fig. 1.

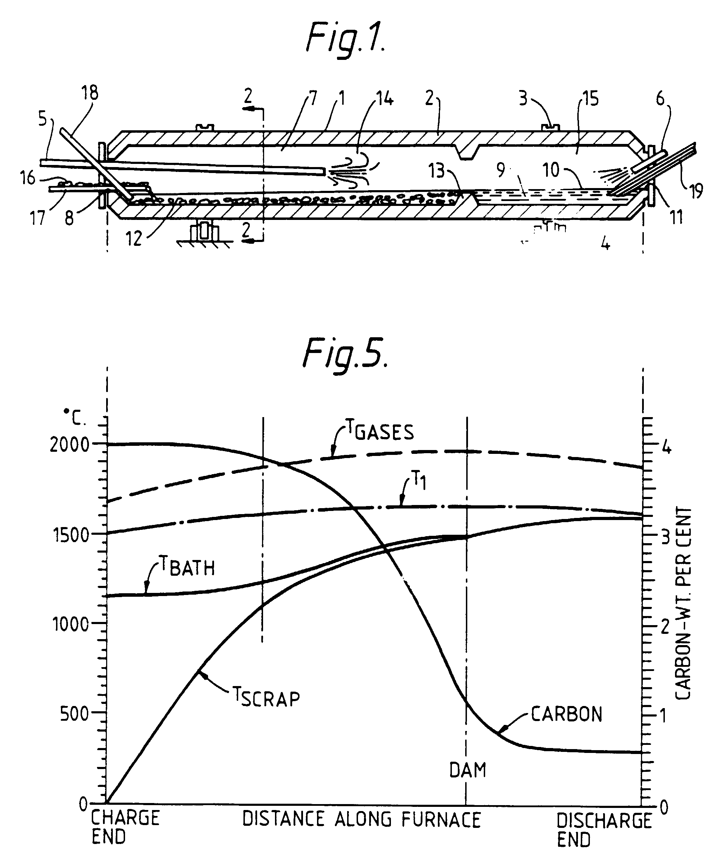

Referring to Fig. 1, the rotary furnace shell 1 is lined with refractory 2 and mounted for rotation on trunnions 3 riding upon rollers 4 in known manner, rotated by means of an adjustable speed drive assembly. The furnace is heated at the charge end by one or more water-cooled oxy-fuel burners 5 and at the discharge end by burner 6, generally burning gas, oil or powdered coal in combination with oxygen or oxygen-enriched air. The general flow of furnace gases 7 is counter-current to the general charge movement, whereby the combustion products of oxy-fuel burner 6 supply heat for refining and adjustment of the steel discharge temperature, and also provide supplementary heat for melting. The combustion products 7 from both burners exit via axial charge end opening 8. Liquid steel is withdrawn at a controlled rate via siphon tube 19 and slag 10 is discharged semi-continuously by overflowing the lip of restricted annular discharge end opening 11 or can be skimmed or removed by vacuum slag cleaner. This is described as a preferred embodiment and it will be evident that tap-holes or other discharge methods, and other heating methods such as electric-arc and/or plasma assisted methods may be used as well as other modifications.

The furnace incline is close to level, usually less than one degree; so that the liquid metal bath 9,12 extends for the full length of the furnace, being retained by annular dam restriction of annular charge and discharge openings 8,11. An additional annular dam 13, over which only a markedly restricted flow area is provided, divides the furnace into two zones, a melting zone 14 and a temperature-composition adjustment zone 15, for refining. It is to be understood that the furnace is primarily a melting unit and this latter zone, commonly may carry out only minimal 'refining', with final composition adjustment and other refining steps being conducted following discharge from the furnace, according to various post-treatment methods, as established in the art of ladle metallurgy. Ferrous scrap 16 is charged by way of water-cooled charging conveyor 17 into the molten metal 12 within the melting zone 14.

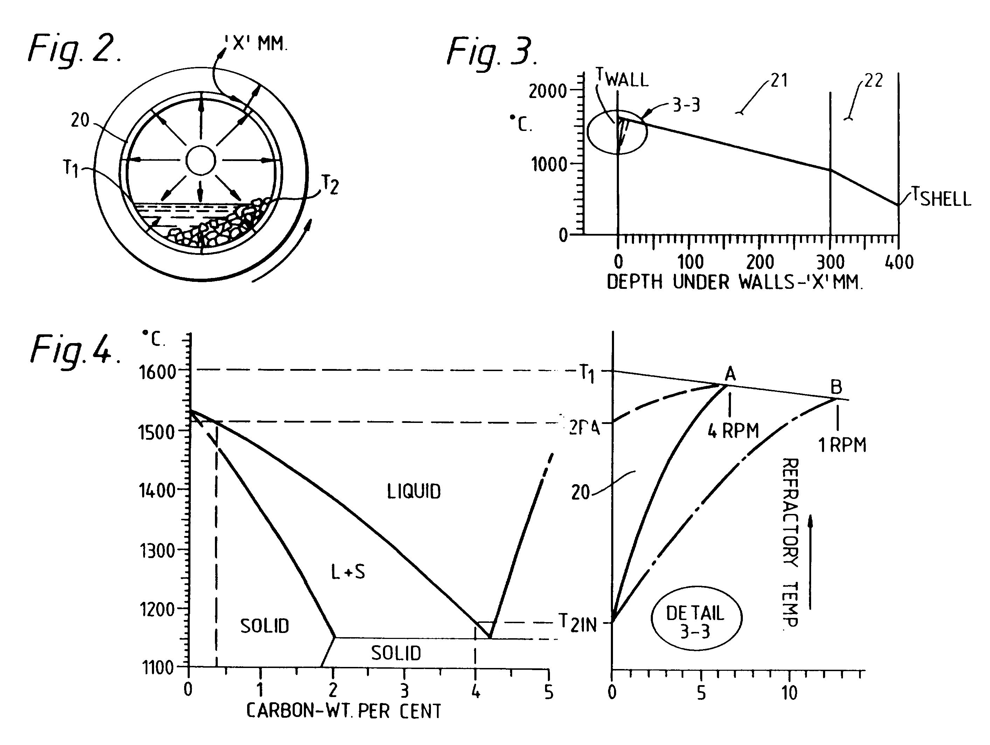

The essence of the invention resides in adjusting and controlling: firstly, temperatures and, secondly, the relative movement, of the solid and liquid components of the charge, together in such a way as to enable a substantially higher rate of throughput in comparison to the prior art. Referring also to Fig. 2, it will be seen that the oxy-fuel burners 5, 6 release hot combustion products from which, in view of the high temperatures, heating occurs predominantly by radiation directly on to the liquid charge surface and also the refractory wall inside surface. For example, at cross section 2-2 during each revolution of the furnace, each point on the walls is heated to temperature T1 by the furnace gases, then cooled to temperature T2 during passage under the charge. Fig. 3 shows a typical steady-state refractory temperature gradient, upon which this cyclical heating and cooling of the inside walls is superimposed. The carbon-magnesia working lining 21 has a higher thermal conductivity than the back-up lining 22 of insulating refractory, hence shows a flatter temperature gradient. The temperature cycling of the inner surface walls occurring during each furnace rotation is also illustrated in Fig. 4 as a magnified view of detail 3-3.

Owing to the intimate contact, combined with the rapid relative motion, heat transfer from wall surface to liquid charge is very efficient, refractory temperature T2 approaching the liquid metal temperature. Referring to the iron-carbon system phase diagram, as reproduced in Fig. 4, it will be seen, for typical 0.4 per cent carbon steels, that the bath is all liquid only down to 1515 C and that liquid metal does not exist below about 1470 C. For a typical magnesite working lining, a typical temperature-depth variation pattern is illustrated as the triangular area T1-A-T2 (PA) (prior art). The depth 'A' of heat penetration corresponds to a rotational speed of approximately 4 revolutions per minute. The area of the triangle defines the amount of heat transferred in-and-out of the refractory into the bath during each revolution of the furnace, taking into account the weight and specific heat of the refractory to the depth of the affected area.

In addition to iron and carbon, other elements which influence melting-point temperatures are often present in the bath. For example, plain carbon steel scrap contains manganese and silicon, as well as residual copper, tin, etc. These elements also influence the bath melting-point temperature, therefore, the approximate temperatures cited, as taken from the iron-carbon phase diagram, do not directly represent actual temperatures, but do realistically indicate approximate relative temperature differences between melting-points at various carbon contents.

Also, the term 'melting-point' as used herein actually represents the 'liquidus temperature' of the system, or the temperature at which freezing commences when descending through this temperature, indicated by the top left sloping line on the phase diagram Fig. 4. Thus, rather than a sharply-defined temperature where complete and abrupt solidification occurs when passing through this temperature, the solidification only commences, dividing the scrap metal into two co-existing phases, namely, molten liquid and solid 'gamma' with composition indicated by isothermal intersection with the lower sloping line. Only with the composition at the eutectic triple-point, where the upper sloping line terminates at the horizontal solid line, is there a sharply defined temperature for complete solidification. Use of the term 'melting-point is to be interpreted in light of these well-known qualifications.

Referring again to the phase diagram, if the carbon content of the melt is increased to approximately 4 per cent, the bath is all liquid down to 1180 C, and mostly liquid to 1150 C. Accordingly, a key step in carrying out the process of this invention is to maintain an elevated carbon level in the melt proximate the charge end of the melting zone 14, thereby depressing the fusion temperature of the melt. This is preferably accomplished by injecting carbon pneumatically by lance 18 in known manner. It is also possible to add carbon raiser as coke, graphite, etc. with the charge, or as pig iron, although these methods are less effective in obtaining immediate dissolution at the charge end to provide maximum benefit during melting.

Since the furnace burners will normally maintain a high bath temperature in the absence of coolant, a second key step, in combination with the first, is continually adding sufficient solid ferrous scrap to remove the superheat and maintain the liquid metal bath cooled down to a substantially lower temperature, preferably proximating the liquidus temperature, as represented on the phase diagram. Under these conditions, the temperature-depth pattern is illustrated by the triangle T1-A-T2(IN) (according to the invention). In this example, the quantity of heat represented at the cross-section illustrated is nearly five times that of the prior art. It is, of course, required that burner heat output be adjusted to maintain temperature T1 at a similar level in both cases.

For maximum heating effect, there should be enough scrap present, at each cross section of the melting zone, to suppress the melt to approximately the liquidus temperature, without such an excess to cause pileups and erratic charge movement. In order to maximize the extent of the desired liquidus temperature depression, the amount of low-carbon dilution by early melt-zone scrap melting should be postponed as long as possible. Further, steel is the usual end product, with the majority of steel containing less than 0.5 per cent carbon, and a moderated carbon content is therefore desirable for the liquid passing over dam 13 into the temperature-composition adjustment zone 15. A third process step, therefore, is to advance the solid charge through the melting zone at a significantly higher rate than the liquid metal, whereby the high-carbon melt acts mainly as a heat-transfer medium rather than as material in-process, the rate of advance being regulated by the furnace slope and rotation speed in a manner taking into account the above conditions. Typically, the scrap remains mostly solid until about the last third of the melting zone, wherein the melt consists mainly of liquid scrap being continually generated in situ by melting solids, whereas in the first third, the melt is essentially high-carbon liquid iron maintained there as semi-permanent heat-transfer media.

The term ferrous scrap 16 is used to describe mainly scrap steel, the major portion of which contains less than 0.5 per cent carbon, although certain grades carry more than 1 per cent. Sponge iron normally contains carbon in the same general range as steel scrap and thus may be considered synonymous with it when this is the case. When pig iron and/or cast iron are included in the charge, they represent significant carbon additive sources, as well as metallic charge sources, and thus as supplementary carbon raisers. Since a specific time is required to reach melting temperature, however, this addition method is not as effective as direct carbon injection in lowering the temperature in the first half of the melting zone.

The heat transfer pattern in the refractory may be approximated using numerical methods-finite differences, or Gauss' error integral. Triangles T1-A-T2 were estimated at a furnace rotation speed of 4 revolutions per minute and T1-B-T2 at 1 rpm. It may be seen that the maximum heat penetration depth is approximately 14 mm at 1 rpm and 7mm at 4 rpm, or one-half as much, with the areas in proportion. Since the latter cycle is repeated 4 times as often, the amount of heat transferred at 4 rpm is about twice as much in real time, and it follows that the heat transferred this way increases roughly proportionally to the square root of the rotational speed. Fig. 5 illustrates an exemplary pattern of temperature variations and bath carbon contents during passage through the furnace. it will be evident, in the melting zone 14 and also the temperature-composition adjustment zone 15, that some axial back-and-forth mixing of liquid charge will occur. In other words, some portion of the carbon injected at the charge end may pass by mixing action along as far as dam 13, thereby diluting the melting scrap at that location and increasing the carbon in the melt passing into zone 15. The amount of this dilution will vary with furnace size, length-to-diameter ratio, rotation speed, etc. The severe restriction at dam 13, and relatively high axial flow velocity over the dam, precludes back-mixing only at this location, between melting and refining. It is also established that some steel scrap melting also occurs by carbon diffusion at temperatures well below steel melting temperatures, such as conditions at the furnace charge end.

In a case where a substantial carbon reduction is required in the temperature-composition adjustment zone 15, e.g. from 2 per cent down to 0.2 per cent, supplementary oxygen lancing may also be employed in said zone 15. Since these reactions are exothermic, burner heat input from the discharge end would be decreased, and the oxygen:fuel ratio also may be increased in the melting zone firing, in order to utilize the surplus carbon monoxide generated by injection.

The illustration Fig. 1 also shows only two burners 5,6. It will be appreciated that additional, or multiple, burners may also be used, inserted from either end on projecting any selected distance, as deemed beneficial to improve the distribution of heat release inside the vessel. Based upon oxygen purity of 90 per cent or more, and natural gas for example, the furnace atmosphere will be approximately one-third carbon dioxide and two-thirds water vapour, resulting in very good overall emissivity, thereby allowing some latitude in burner location and direction whilst maintaining satisfactory operation.

To illustrate the process features by way of an example, a rotary melting furnace, operated generally according to the foregoing description and drawing Figs. 1-5, has an approximate diameter of 2 meters, as measured inside the refractory lining, and a length of 18 meters, of which 12 meters represents melting zone 14, which has a working lining of carbon-magnesia refractories. The longitudinal furnace axis is inclined at an angle of approximately one-half degree and the charge depth is approximately 0.35 meters at the charge end, increasing to 0.5 meters at the dishcarge end, with an average depth in the melting zone of approximately 0.4 meters.

When operated continuously at a rotation speed of 4 rpm, including charge end carbon injection and the general temperature pattern of Fig. 5, the rate of heat transfer into the charge within the melting zone ranges from approximately 190,000 Kg.Cal. per square meter per hour in the first third of the melting zone down to 80,000 just prior to passage over dam 13, with a representative average of about 140,000 for the entire melting zone 14. The refractory walls have a total surface area of approximately 76 and the bath surface 18 square meters. The amount of heat transferred via flame-to-walls-to-charge is thus on the order of 10 million Kg.-Cal. per hour. At an hourly rate of 160,000 per square meter, there is approximately an additional 3 million Kg.-Cal, per hour transferred directly via the bath surface, resulting in an aggregate of 13 million Kg.-Cal. per hour. The metal bath passing over dam 13, at 1500 C, contains approximately 320 Kg.-Cal. per Kg. above 25 C ambient charge temperature. The melting rate is thus equivalent to 13,000/320 or approximately 40 metric tons per hour, also representing the charging rate for fresh steel scrap at the charge end.

The total charge weight is approximately 66 metric tons, whereby the average furnace residence time is about 100 minutes, of which 67 minutes represents melting-zone time and 33 minutes refining-zone time. At a rotation speed of 4 revolutions per minute, solid scrap will traverse the 12-meter melting zone length in approximately 35 minutes, moving significantly more rapidly than the charge as a whole. This relatively faster movement assures that scrap melting takes place predominantly in the last third of the melting zone, resulting in a carbon content well under 2 per cent at passage on to refining, whilst at the same time injecting carbon at the charge end to maintain liquid iron there containing 4-4.3 per cent carbon.

The production rate of 40 tonnes per hour is close to three times the melting rate for direct charge into a low-medium carbon steel bath, with equivalent inside-furnace temperatures. At the same time, the overall fuel consumption, with oxy-fuel combustion, is less than 600,000 Kg.-Cal. per tonne. Furnace temperatures can, of course, be raised simply by increasing the fuel-oxygen firing rates, but at a corresponding sacrifice in the life of refractories and fuel efficiencies. The process and apparatus of this invention thus renders high production feasible, together with cost-effective maintenance requirements and fuel rates, as not heretofore practical in the prior art.

It will be appreciated that the preferred embodiments of a process and apparatus for high-production rotary furnace steelmaking have been described and illustrated and that variations and modification may be made by persons skilled in the art, without departing from the scope of the invention defined in the appended claims.

## Claims

1. A process for steelmaking in an elongated rotary furnace (1) incorporating refractory inner furnace walls (2) extending along the length of the furnace from a restricted annular charge end opening (8) to a restricted annular discharge end opening (11), comprising the combination of the following steps:
(a) maintaining a hot liquid ferrous metal bath (9,12) with a bath top surface spanning and confined between said charge end and discharge end openings and at least partially covered by a layer of slag (10), with undersurface contained and supported within said inner furnace walls (2), and with a melting zone (14) comprising a substantial portion of said furnace length holding a melting zone bath (12) containing solid charge not yet melted;
(b) supplying heat to said bath (12) by combustion of fuel and oxygen to effect heat radiation by hot furnace gases (7) directly onto said bath and slag surface from above and also indirectly by heating said inner furnace walls and thereby said bath by direct transfer from said wall surface to said under-surface of the bath during each rotation, during the interval that the heated walls are passed beneath and in direct contact with said bath (12);
(c) introducing supplementary carbon proximate the charge end opening (8) to dissolve in the bath (12) in sufficient quantity to form a liquid heat-transfer medium within said melting zone (14) with lowered melting-point temperature as characteristic of cast iron containing carbon in the range of about 2 to 4.25 per cent carbon;
(d) adding a charge of solid steel scrap (16), into said liquid heat-transfer medium proximate said charge end opening, thereby continually cooling and maintaining said heat-transfer medium at a lowered temperature approaching said bath melting-point temperature;
(e) continually advancing said solid steel scrap (16) fonvard along said melting zone at a substantially faster average rate than said liquid heat-transfer medium is advancing, but not so rapidly that there is insufficient scrap present at each furnace cross-section to absorb substantially an equivalent quantity of heat to that transferred from said furnace gases and walls into said heat-transfer medium, that is, as necessary to cool and maintain said lowered temperature of said medium at each cross-section of said melting zone (14);
(f) allowing said solid steel scrap to melt upon approaching completion of melting at termination of the melting zone, the scrap melted at this stage thereby diluting and lowering the bath carbon content with corresponding increase in bath melting-point temperature; and (g) discharging molten liquid ferrous metal from proximate said discharge end opening (11).

2. A process according to claim 1 in which said rotary furnace includes an intermediate annular dam (13) at a location intermediate between said charge end opening (8) and discharge end opening (11), said dam substantially defining a division between the melting zone (14) and a temperature-composition adjustment zone (15) within said rotary furnace, also characterized by the steps of: restricting the liquid metal flow cross-section effecting an axial flow velocity across said annular dam (3), from said melting zone (14) into said temperature-composition adjustment zone (15), substantially higher than the general rate of forward charge movement, at the same time substantially obstructing solid scrap from further advancement by means of the upstream face of said annular dam, thus providing a substantially solid-free temperature-composition adjustment zone extending to said discharge end opening (11), allowing liquid metal flow essentially only one-way over said annular dam from melting zone (14) into temperature-composition adjustment zone (15) forward in the axial direction, without back-mixing in the reverse direction across said annular dam restriction (13); and advancing the liquid metal (9) and slag (10) within said temperature-composition adjustment zone (15) and discharging said liquid metal proximate said discharge end opening (11).

3. A process according to claim 2 including the step of heating said temperature-composition adjustment zone (15) directly by means of at least one oxy-fuel burner (6) projecting fuel and oxygen directly into said zone (15) for combustion, thereby independently adjusting and controlling the temperature of liquid metal therein and also subsequently providing supplementary heat to said melting zone (14) by said countercurrent flow of combustion products through said melting zone (14).

4. A process according to claim 1, claim 2 or claim 3 wherein said steel scrap substantially contains less than one per cent carbon, and the majority less than 0.5 per cent carbon.

5. A process according to claim 1, or any one of claims 1 to 4, wherein said liquid metal discharging proximate said discharge end opening (11) comprises liquid steel.

6. A process according to claim 1, or any one of claims 2 to 5 wherein the longitudinal axis of said rotary furnace is inclined downwardly from the charge end towards the discharge end at an angle less than 1 degree, and said furnace is rotated to effect said substantially faster average rate of advance of said solid steel scrap in relation to said liquid heat-transfer medium.

7. A process according to claim 1, or any one of claims 2 to 6, wherein the net average rate of advance of said liquid heat-transfer medium maintained proximate said charge end opening (8) is substantially zero, corresponding to effectively zero initial melting and dissolution of said solid steel scrap following introduction and prior to the scrap approaching its melting temperatures, that is, substantially all of the net advance of the charge is initially attributable to the advance of solid scrap which absorbs heat as a solid without melting, and wherein the majority of the liquid passing on from said melting zone comprises scrap having just melted within the final one-third of the length of the melting zone according to the stage when melting-point temperatures of said solid scrap have been reached.

8. A process according to claim 1, or any of claims 2 to 7, wherein the melting zone bath (12) is confined within carbon-magnesia refractory walls whereby the said substantial carbon content of said heat-transfer medium also substantially decreases refractory loss caused by refractory-carbon oxidation.

9. A process according to claim 1, or any one of claims 2 to 8, wherein the melting zone bath (12) is confined within carbon-magnesia refractory walls whereby the said substantial carbon content of said heat-transfer medium also substantially decreases refractory loss caused by refractory-carbon oxidation, and also including the step of introducing magnesia into the furnace charge sufficient to maintain the slag layer (10) substantially magnesia-saturated, thereby decreasing refractory losses caused by magnesia-erosion from the furnace walls (2).

## Patentansprüche

1. Verfahren zur Herstellung von Stahl in einem länglichen Drehofen (1) mit feuerfesten Ofeninnenwänden (2), welche von einer verengten ringförmigen Beschickungsöffnung (8) längs des Ofens zu einer verengten ringförmigen Ablassöffnung (11) verlaufen, das folgenden Schritte in Kombination umfasst:
(a) Aufrechthalten einer heissen flüssigen Eisenstahlschmelze (9, 12), wobei die Oberflächenweite der Schmelze bestimmt wird von den Beschickungs- und Auslassöffnungen, die Oberfläche zumindest teilweise bedeckt ist von einer Schlackenschicht (10), die Unterseite aufgenommen ist und getragen wird von den Ofeninnenwänden (2), und die Schmelzzone (14) einen erheblichen Teil der Ofenlänge ausmacht, welche die Schmelzzone (12) mit der noch nicht geschmolzenen festen Beschickung enthält;
(b) Zuführen von Wärme zur Schmelze (12) durch Verbrennen von Brennstoff und Sauerstoff, so dass man wegen der heißen Ofengase (7) direkt von oben eine Wärmestrahlung auf die Schmelze und die Schlackenoberfläche erhält, und indirekt auch dadurch, dass die Ofeninnenwände erhitzt werden und dass bei jeder Drehung - während des Zeitraumes, in dem die erhitzen Wände unten durchgeführt und in direktem Kontakt mit der Schmelze (12) sind - die Wärme direkt von der Wandoberfläche auf die Schmelzen-Unterseite übertragen wird;
(c) Zuführen von weiterem Kohlenstoff im Bereich der Beschickungsöffnung (8), um ihn in hinreichender Menge in der Schmelze (12) zu lösen und Herstellen eines flüssigen Wärmeübertragungsmediums innerhalb der Schmelzzone (14), das eine geringere Schmelztemperatur besitzt, und zwar als Gußeisen mit einem Kohlenstoffgehalt im Bereich von etwa 2 bis 4.25% Kohlenstoff;
(d) Zuführen einer Beschickung aus festen Stahlschrott (16) in das flüssige Wärmeübertragungsmedium nächst der Beschickungsöffnung, so dass das Wärmeübertragungsmedium stetig gekühlt wird und das Wärmeübertragungsmedium, das der Schmelztemperatur der Schmelze nahekommt, auf einer geringer Temperatur gehalten wird;
(e) stetiges Vorbewegen des festen Stahlschrotts (16) vorwärts längs der Schmelzzone und zwar mit einer erheblich schnelleren Durchschnittsgeschwindigkeit als für das flüssige Wärmeübertragungsmedium, aber nicht so rasch, dass nicht an jedem Ofenquerschnitt genügend Schrott zugegen ist, der im wesentlichen eine Wärmemenge aufnimmt, welche gleich der ist, die von den Ofengasen und den Wänden in das Wärmeübertragungsmedium übertragen wird, das heisst, soviel wie notwendig ist, um das Medium an jedem Querschnitt der Schmelzzone (14) zu kühlen und auf der niedrigeren Temperatur zu halten;
(f) Schmelzenlassen des festen Stahlschrotts, so dass er gegen Ende der Schmelzzone nahezu vollständig geschmolzen ist und dann in diesem Stadium den Kohlenstoffgehalt der Schmelze verdünnt und senkt, wobei die Schmelztemperatur der Schmelze entsprechend zunimmt; und
(g) Ablassen des geschmolzenen flüssigen Eisenmetalls aus dem Bereich der Auslassöffnung (11).

2. Verfahren nach Anspruch 1, wobei der Drehofen einen ringförmigen Zwischendamm (13) aufweist an einer Stelle zwischen der Beschickungs- (8) und der Ablassöffnung (11), wobei der Damm im Drehofen im wesentlichen eine Trennung zwischen Schmelz- (14) und Zusammensetzungs-Einstellzone (15) bestimmt, das also gekennzeichnet ist durch die Schritte:
Begrenzen des Fließquerschnitts für das flüssige Metall und Erzeugen einer axialen Fließgeschwindigkeit über den ringförmigen Damm (3) von Schmelzzone (14) zu Temperatur-Zusammensetzungs-Einstellzone (15), die erheblich größer ist als die allgemeine Vorwärtsgeschwindigkeit der Beschickung, so dass gleichzeitig verhindert wird, dass der feste Schrott nennenswert vorankommt, und zwar mit Hilfe der stromaufwärts liegenden Seite des ringförmigen Damms, so dass eine im wesentlichen feststofffreie Temperatur-Zusammensetzungs-Einstellzone erhalten wird, die sich bis zur Auslassöffnung (11) erstreckt, so dass der Fluss des flüssigen Metalls aus der Schmelzzone (14) im wesentlichen in einer Richtung vorwärts, in axialer Richtung, über den ringförmigen Damm in die Temperatur-Zusammensetzungs-Einstellzone (15) erfolgt, ohne ein Rückmischen in umgekehrter Richtung über die ringförmige Dammenge (13); und
Vorbewegen des flüssigen Metalls (9) und der Schlacke (10) innerhalb der Temperatur-Zusammensetzungseinstellzone (15) und Ablassen des flüssigen Metalls aus dem Bereich der Ablassöffnung.

3. Verfahren nach Anspruch 2, umfassend die Schritte:
Heizen der Temperatur-Zusammensetzungs-Einstellzone (15) direkt mit mindestens einem Oxy-Brennstoffbrenner (6), der Brennstoff und Sauerstoff für eine Verbrennung direkt in die Zone (15) injiziert, so dass unabhängig voneinander die Temperatur des flüssigen Metalls darin eingestellt und geregelt wird und auch danach eine Zusatzheizung der Schmelzzone (14) bereitsteht und zwar durch einen gegenläufigen Fluss der Verbrennungsprodukte durch die Schmelzzone (14).

4. Verfahren nach Anspruch 1, Anspruch 2 oder Anspruch 3, wobei der Stahlschrott im wesentlichen weniger als 1% Kohlenstoff und in der Mehrheit weniger als 0.5% Kohlenstoff enthält.

5. Verfahren nach Anspruch 1 oder irgendeinem der Ansprüche 1 bis 4, wobei das flüssige Metall, das aus dem Bereich der Ablassöffnung (11) abgelassen wird, flüssigen Stahl enthält.

6. Verfahren nach Anspruch 1 oder irgendeinem der Ansprüche 1 bis 5, wobei die Längsachse des Drehofens vom Beschickung- zum Ablassende in einem Winkel von weniger als 1 Grad nach unten geneigt ist und der Ofen so gedreht wird, dass der feste Stahlschrott im Durchschnitt wesentlich schneller vorbewegt wird als das flüssige Wärmeübertragungsmedium.

7. Verfahren nach Anspruch 1 oder irgendeinem der Ansprüche 2 bis 6, wobei die durchschnittliche Netto-Vorwärtsbewegung des flüssigen Wärmeübertragungsmediums, die im Bereich der Ablassöffnung (8) aufrechterhalten wird, im wesentlichen bei Null liegt - entsprechend dem effektiv bei Null liegenden Schmelzen bzw. Auflösen des festen Stahlschrotts zu Beginn nach dem Einbringen und bevor der Stahlschrott seine Schmelztemperatur erreicht hat, das heisst, dass im wesentlichen die ganze Netto-Vorwärtsbewegung der Beschickung zu Beginn im wesentlichen auf die Vorwärtsbewegung des festen Schrotts zurückzuführen ist, welcher die Wärme als Feststoff - ohne zu schmelzen - absorbiert, wobei die meiste Flüssigkeit, die aus der Schmelzzone kommt, frisch geschmolzenen Schrott enthält, geschmolzen im Bereich des Schlussdrittels der Schmelzzone und entsprechend der Stufe, bei der die Schmelztemperaturen für den festen Schrott erreicht werden.

8. Verfahren nach Anspruch 1 oder irgendeinem der Ansprüche 2 bis 7, wobei der Schmelzzonenbereich (12) zwischen feuerfesten Carbon-Magnesiawänden liegt, wobei der substantielle Kohlenstoffgehalt des Wärmeübertragungsmediums auch erheblich den Futterschwund aufgrund einer Oxidation des Futterkohlenstoffs senkt.

9. Verfahren nach Anspruch 1 oder irgendeinem der Ansprüche 1 bis 8, wobei der Schmelzzonenbereich (12) innerhalb feuerfester Carbon-Magnesiawände liegt, wobei der substantielle Kohlenstoffgehalt des Wärmeübertragungsmediums auch substantiell den Futterschwund senkt, der bewirkt durch die Oxidation des Kohlenstoffs im Futter, und weiterhin den Schritt umfasst: Zuführen von Magnesia in die Ofenbeschickung in einer Menge, dass die Schlackenschicht (10) im wesentlichen Magnesia-gesättigt ist, wodurch dem Futterschwund wegen einer Magnesiaerrosion aus den Ofenwänden (2) gegegnet wird.

## Revendications

1. Procédé de fabrication d'acier dans un four rotatif allongé (1) comprenant des parois réfractaires internes (2) de four disposées sur toute la longueur du four d'une ouverture annulaire rétrécie (8) d'extrémité de charge à une ouverture annulaire rétrécie (11) d'extrémité de décharge, comprenant la combinaison des étapes suivantes :
(a) le maintien d'un bain liquide chaud (9, 12) d'un métal ferreux ayant une surface supérieure de bain qui s'étend entre les ouvertures des extrémités de charge et décharge, qui est confinée entre ces ouvertures et qui est au moins partiellement couverte par une couche de laitier (10), une zone inférieure à la surface étant contenue et supportée à l'intérieur des parois internes (2) du four, une zone de fusion (14) qui forme une partie importante de la longueur du four contenant un bain (12) de zone de fusion qui contient une charge solide qui n'est pas encore fondue,
(b) la transmission de chaleur au bain (12) par combustion d'un combustible et d'oxygène afin qu'un rayonnement thermique soit obtenu à l'aide de gaz chauds (7) du four appliqués par-dessus directement à la surface du bain et du laitier et aussi indirectement par chauffage des parois internes du four et ainsi du bain par transfert direct des surfaces de paroi à la surface inférieure du bain à chaque rotation pendant l'intervalle pendant lequel les parois chauffées passent sous le bain (12) et sont en contact direct avec celui-ci,
(c) l'introduction d'une quantité supplémentaire de carbone à proximité de l'ouverture (8) de l'extrémité de charge afin qu'il se dissolve dans le bain (12) en quantité suffisant pour la formation d'un fluide liquide de transfert de chaleur dans la zone de fusion (14) avec une température de fusion plus basse, caractéristique de la fonte contenant du carbone en quantité comprise entre environ 2 et 4,25 %,
(d) l'addition d'une charge de ferrailles solides (16) dans le fluide liquide de transfert de chaleur à proximité de l'ouverture de l'extrémité de charge, de manière que le fluide de transfert de chaleur soit constamment refroidi et entretenu à une température inférieure proche de la température de fusion du bain,
(e) l'avance continue des ferrailles solides (16) le long de la zone de fusion avec une vitesse nettement plus grande que celle de l'avance du fluide liquide de transfert de chaleur, mais pas au point que la quantité de ferrailles soit insuffisante, dans chaque section de four, pour absorber pratiquement une quantité de chaleur qui équivaut à celle qui est transférée par les gaz et les parois du four au fluide de transfert de chaleur, c'est-à-dire nécessaire au refroidissement et à l'entretien de la température abaissée du fluide dans chaque section de la zone de fusion (14),
(f) la fusion des ferrailles solides lorsqu'elles se rapprochent de la fin de fusion à la terminaison de la zone de fusion, les ferrailles dans cette étape diluant ainsi le bain et réduisant sa teneur en carbone avec augmentation correspondante de la température de fusion du bain, et
(g) l'évacuation du métal ferreux liquide fondu du voisinage de l'ouverture (11) de l'extrémité de décharge.

2. Procédé selon la revendication 1, dans lequel le four rotatif comporte un barrage annulaire intermédiaire (13) à un emplacement compris entre l'ouverture (8) de l'extrémité de charge et l'ouverture (11) de l'extrémité de décharge, ce barrage délimitant pratiquement une séparation entre la zone de fusion (14) et une zone (15) d'ajustement de composition dans le four rotatif, le procédé étant aussi caractérisé par les étapes suivantes :
la restriction de la section d'écoulement du métal liquide qui affecte la vitesse de circulation axiale sur le barrage annulaire (3), de la zone de fusion (14) dans la zone (15) d'ajustement de composition-température, à une valeur nettement supérieure à la vitesse générale de déplacement de la charge vers l'avant, avec simultanément retenue des ferrailles solides afin qu'elles n'avancent plus, par la face amont du barrage annulaire, avec formation de cette manière d'une zone d'ajustement de composition-température pratiquement dépourvue de matières solides s'étendant vers l'ouverture (11) d'extrémité d'évacuation, et permettant au courant de métal liquide de passer de manière pratiquement unidirectionnelle sur le barrage annulaire de la zone de fusion (14) à la zone (15) d'ajustement de composition-température en avant dans la direction axiale, sans mélange par retour en sens inverse de l'autre côté du rétrécissement annulaire (13) formé par le barrage, et
l'avance du métal liquide (9) et du laitier (10) dans la zone (15) d'ajustement de composition-température et l'évacuation du métal liquide à proximité de l'ouverture (11) de l'extrémité d'évacuation.

3. Procédé selon la revendication 2, comprenant l'étape de chauffage de la zone (15) d'ajustement de composition-température directement par au moins un brûleur (6) à combustible et oxygène projetant le combustible et l'oxygène directement dans ladite zone (15) de combustion, avec ajustement et réglage indépendants de la température du métal liquide à cet emplacement, et avec transmission aussi ultérieurement d'une quantité supplémentaire de chaleur à la zone de fusion (14) par circulation à contre-courant des produits de combustion dans la zone de fusion (14).

4. Procédé selon la revendication 1, 2 ou 3, dans lequel les ferrailles contiennent pratiquement moins de 1 % de carbone, et leur majorité contient moins de 0,5 % de carbone.

5. Procédé selon la revendication 1 ou l'une quelconque des revendications 1 à 4, dans lequel le métal liquide évacué près de l'ouverture (11) de l'extrémité d'évacuation est de l'acier liquide.

6. Procédé selon la revendication 1 ou l'une quelconque des revendications 2 à 5, dans lequel l'axe longitudinal du four rotatif est incliné vers le bas de l'extrémité de charge vers l'extrémité d'évacuation avec un angle inférieur à 1°, et le four est entraîné en rotation afin qu'il donne une vitesse moyenne d'avance des ferrailles solides nettement plus grande que celle du fluide liquide de transfert de chaleur.

7. Procédé selon la revendication 1 ou l'une quelconque des revendications 2 à 6, dans lequel la vitesse moyenne résultante d'avance du fluide liquide de transfert de chaleur maintenue à proximité de l'ouverture (8) de l'extrémité de charge est pratiquement nulle et correspond à une fusion et une dissolution initiales pratiquement nulles des ferrailles solides après introduction et avant que les ferrailles n'approchent de leur température de fusion, c'est-à-dire que pratiquement la totalité de l'avance résultante de la charge peut être attribuée initialement à l'avance des ferrailles solides qui absorbent la chaleur comme une matière solide sans fusion, et dans lequel la majorité du liquide provenant de la zone fondue contient des ferrailles qui viennent juste d'être fondues dans le tiers final de la longueur de la zone de fusion dans l'étape dans laquelle les températures de fusion des ferrailles solides ont été atteintes.

8. Procédé selon la revendication 1 ou l'une quelconque des revendications 2 à 7, dans lequel le bain (12) de la zone de fusion est confiné à l'intérieur de parois réfractaires de carbone-magnésie si bien que la teneur importante en carbone du fluide de transfert de chaleur réduit aussi notablement les pertes de réfractaire provoquées par l'oxydation du carbone du réfractaire.

9. Procédé selon la revendication 1 ou l'une quelconque des revendications 2 à 8, dans lequel le bain (12) de la zone de fusion est confiné à l'intérieur de parois réfractaires de carbone-magnésie, si bien que la teneur importante en carbone du fluide de transfert de chaleur réduit aussi notablement les pertes de réfractaire provoquées par l'oxydation du carbone du réfractaire, le procédé comprenant aussi l'étape d'introduction de magnésie dans la charge du four en quantité suffisante pour que la couche de laitier (10) soit entretenue sous une forme pratiquement saturée en magnésie, si bien que les pertes du réfractaire provoquées par l'érosion de la magnésie des parois du four (2) sont réduites.
